# EUROPÄISCHE PATENTANMELDUNG

(11) **EP 2 219 256 A2**
(43) Veröffentlichungstag der Anmeldung: **18.08.2010**
(21) Anmeldenummer: 10001183.2
(22) Anmeldetag: 05.02.2010
(51) Int. Cl.: H01M 8/04, H01M 8/06

(54) **SOFC Brennstoffzelle mit einem externen Dampfreformer**

(30) Priorität: 11.02.2009 AT 2222009
(71) Anmelder: Vaillant GmbH, 42859 Remscheid (DE)
(72) Erfinder: Badenhop, Thomas, 51688 Wipperfürth (DE); Kraus, Matthias, 42929 Wermelskirchen (DE); Lis, Raimund, 42369 Wuppertal (DE); Plümke, Marco, 40225 Düsseldorf (DE)
(74) Vertreter: Hocker, Thomas

(57) **Zusammenfassung**

Hochtemperaturbrennstoffzellensystem, welches eine brenngasführende Anode und eine luftführende Kathode, ein Dampfreformer zur Brenngasbereitung, ein dem Dampfreformer nachgeschalteter Wärmetauscher zur Nachbehandlung von Brenngas und mindestens ein Wärmetauscher zur Nachbehandlung von Anodenabgas aufweist, wobei der Dampfreformer stromauf der Anode angeordnet ist, wobei diesem über eine Leitung, eine Pumpe und einen vorgeschalteten Dampferzeuger deionisiertes Wasser zur Erzeugung vom wasserstoffangereicherten Brenngas zugeführt wird und der dem Dampfreformer nachgeschalteten Wärmetauscher zwischen dem Dampfreformer und der Anode vorgesehen ist.

## Beschreibung

Die Erfindung bezieht sich auf ein Hochtemperaturbrennstoffzellensystem mit einer Hochtemperaturbrennstoffzelle, die eine brenngasführende Anode und eine luftführende Kathode aufweist.

Brennstoffzellen wandeln chemische Energie direkt in elektrische Energie um und bestehen aus einem ionenleitenden und gasdichten Elektrolyten, einer luftführenden Kathode und einer brenngasführenden Anode, die dem Elektrolyten angrenzen. Unterschiedliche Elektrolytarten definieren unterschiedliche Brennstoffzellentypen und deren Betriebstemperaturen. Eine Festoxidbrennstoffzelle (Solid Oxide Fuel Cell oder SOFC) ist eine Hochtemperatur-Brennstoffzelle, die bei einer Betriebstemperatur von 800 C - 1000°C betrieben wird. Der innere Ladungstransport einer solchen Hochtemperatur-Brennstoffzelle erfolgt mittels O₂-lonen, wobei die SOFC-Brennstoffzelle auf der Anodenseite Sauerstoff zur Produktion von Wasser H₂O und/oder Kohlendioxid CO₂ an der Anode benötigt.

Da der ebenfalls für die Produktion von Wasser erforderliche Wasserstoff als Brennstoff in der Hausenergieversorgung in der Regel nicht zur Verfügung steht, muss dieser erst aus üblichen Brennstoffen z.B. Kohlenwasserstoffe wie Erdgas oder Heizöl EL hergestellt werden. Beim Betrieb von Brennstoffzellen mit solchen Kohlenwasserstoffen wird der Brennstoffzelle in der Regel ein Reformer vorgeschaltet, in dem ein wasserstoffreiches Gas (Reformat) aus dem Kohlenwasserstoff erzeugt (reformiert) wird. Als Reformierungsverfahren sind die Dampfreformierung, die autotherme Reformierung oder die katalytische partielle Oxidation bekannt.

Brennstoffzellensysteme auf Erdgasbasis mit Hochtemperaturbrennstoffzellen (oxidkeramischen SOFC-Brennstoffzellen) weisen hohe elektrische Wirkungsgrade auf. Dabei wird der elektrische Systemwirkungsgrad durch das eingesetzte Brenngaserzeugungsverfahren bestimmt. Die hohen elektrischen Systemwirkungsgrade lassen sich immer dann realisieren, wenn Wasserdampf für die Brenngaserzeugung eingesetzt wird.

Aus dem Stand der Technik ist die Kombination einer SOFC-Brennstoffzelle mit interner Methandampfreformierung bekannt. Üblicherweise wird die Dampfreformierungsreaktion in der Anode der SOFC-Brennstoffzelle ausgeführt. Das Produktwasser aus der elektrochemischen Reaktion liefert das notwendige Prozesswasser gleich auf der gewünschten Temperatur für die Reformierungsreaktionen:

CH₄ + H₂O → CO + 3H₂ (Dampfreformierung) (1)

CO + H₂O → CO₂ + H₂ (Wassergas-Shift). (2)

Der gebildete Wasserstoff kann seinerseits wieder elektrochemisch in der SOFC-Brennstoffzelle zu Wasser oxidiert werden. Dieser Prozess wird als interne Dampfreformierung bezeichnet, weil die Brenngaserzeugung und die elektrochemische Reaktion zusammen in der Anode ablaufen und einen hohen elektrischen Wirkungsgrad sicherstellen.

Nachteil der internen Dampfreformierung in der Anode einer SOFC-Brennstoffzelle ist, dass Nickel als Katalysator für die Methanreformierung in der Anode benötigt wird. Nickel kann aber auch gleichzeitig als Elektrokatalysator genutzt werden. Alle derzeitigen technisch verfügbaren Anoden einer SOFC-Brennstoffzelle nutzen nickelhaltige Katalysatoren. Nickel neigt dazu, großvolumige Oxide zu bilden:

Ni + ½ O₂ ↔ NiO (RedOx-Reaktion). (3)

Die Betriebstemperatur nickelhaltiger Anoden einer SOFC-Brennstoffzelle liegt in der Regel bei 800°C bis 850°C. Nach dem Abschaltvorgang eines Brennstoffzellen-Heizgerätes in der Hausenergieversorgung kann durch diffuse Transportvorgänge Luftsauerstoff an die noch warme Anode gelangen. Der Sauerstoffeinbruch an der Anode erfolgt durch diese Transportvorgänge schneller als das Abkühlen der Anode unterhalb der kritischen Oxidationstemperatur von Nickel, die im Bereich von 320°C bis 550°C liegt. Dadurch kommt es zu einer Oxidation des Nickelkatalysators auf der Anode und beim nächsten Betrieb der Anode der SOFC-Brennstoffzelle wieder zur Reduktion des Nickeloxides. Aufgrund der signifikant verschiedenen Volumina von Nickel und Nickeloxid kommt es dann zu Gefügeausdehnungen an der Anode, die zu einer schnellen Zerstörung der Anode führen.

Weiterer Nachteil der internen Dampfreformierung ist, dass die exotherme elektrochemische Oxidation von Wasserstoff an der Anode mit der endothermen Dampfreformierungsreaktion im Einklang gebracht werden muss, d.h. die elektrochemische Reaktion muss die benötigte Reaktionswärme für die Dampfreformierung liefern. Umgekehrt muss die Dampfreformierungsreaktion die Reaktionswärme der elektrochemischen Reaktion aufnehmen. Sollte aus der elektrochemischen Reaktion zu wenig Reaktionswärme an die Reformierung geliefert werden, so kühlt der Brennstoffzellenstapel aus. Die Sauerstoffionen-Leitfähigkeit durch den Elektrolyten und somit auch die Leistung der Brennstoffzelle nimmt dabei ab. Damit verringert sich die zur Verfügung stehende Wärme für die Reformierung. Die Wasserstoffleistung nimmt ab und es kann zu einem Absinken des Wasserstoffpartialdruckes kommen, der zum Absinken der Klemmspannung am Brennstoffzellenstapel der Brennstoffzelle führt und der Brennstoffzellenstapel nicht mehr in der gewünschten Weise funktioniert.

Im umgekehrten Fall kommt es zu einer Zerstörung des Brennstoffzellenstapels durch Überhitzung, wenn die elektrochemische Reaktion mehr Reaktionswärme liefert als die Dampfreformierung aufnimmt. Das Wärmemanagement eines Brennstoffzellensystems mit interner Dampfreformierung ist durch die an der Anode ablaufenden Reaktionen sehr komplex und erschwert die Regelung eines modulierenden Betriebs eines Brennstoffzellen-Heizgeräts enorm.

Um Verkokungen der Anode bei der internen Dampfreformierung zu vermeiden ist in der Regel ein sogenannter Vorreformer der Anode stromaufwärts vorgeschaltet. Aufgabe dieses Vorreformers ist es, eine Verkürzung der Kohlenwasserstoffketten, vorzugsweise in Kettenlänge kleiner 2, zu gewährleisten. Dieser Vorreformer ist mit Luft und/oder Wasserdampf zu versorgen, damit im Vorreformer zum einem die Länge der Kohlenwasserstoffketten reduziert und um zum anderen Verkokungen im Vorreformer durch z.B. Pyrolyse vermieden werden können.

Nicht nickelhaltige Elektrokatalysatoren haben bisher den entscheidenden Nachteil, dass diese für die interne Methandampfreformierung in SOFC-Anoden ungeeignet oder nur bedingt sind. Ihr Vorteil gerade für die Hausenergieversorgung ist, dass diese RedOx-stabiler sind, d.h. bei Sauerstoffeinbruch auf die Anode nach dem Abschalten nicht oder vermindert oxidiert werden und somit nicht zu zerstörerischen Gefügeänderungen am Anodenmaterial führen.

Nachteil der internen Dampfreformierung ist auch die komplexe Reaktionsführung und das komplexe Wärmemanagement am Brennstoffzellenstapel. Für den Einsatz in der Hausenergieversorgung erscheint diese Verfahrenskombination nicht geeignet.

Aufgabe des erfindungsgemäßen Hochtemperaturbrennstoffzellensystems ist es, die Vorteile der Dampfreformierung in Kombination mit einer SOFC-Brennstoffzelle zu nutzen, wobei die Nachteile einer internen Dampfreformierung vermieden werden.

Diese Aufgabe wird mit einem Hochtemperaturbrennstoffzellensystem gelöst, welches eine brenngasführende Anode und eine luftführende Kathode, ein Dampfreformer zur Brenngasbereitung, ein dem Dampfreformer nachgeschalteter Wärmetauscher zur Nachbehandlung von Brenngas und mindestens ein Wärmetauscher zur Nachbehandlung von Anodenabgas aufweist, wobei der Dampfreformer stromauf der Anode angeordnet ist,
wobei diesem über eine Leitung, eine Pumpe und einen vorgeschalteten Dampferzeuger deionisiertes Wasser zur Erzeugung vom wasserstoffangereicherten Brenngas zugeführt wird und der dem Dampfreformer nachgeschalteten Wärmetauscher zwischen dem Dampfreformer und der Anode vorgesehen ist.

Besonders vorteilhaft ist, dass auf eine interne Dampfreformierung verzichtet wird und der Anode ein externer Dampfreformer vorgeschaltet wird, der auch die Kathodenluftvorwärmung übernimmt. Auf einen Vorreformer kann verzichtet werden.

Die erfindungsgemäße Hochtemperaturbrennstoffzellensystem und Verfahren werden in einem Brennstoffzellen-Heizgerät für Ein- und Mehrfamilienhäusern sowie im Kleingewerbe als Kraft-Wärme-Koppelungsanlage eingesetzt.

Besonders vorteilhaft für den Wirkungsgrad des Hochtemperaturbrennstoffzellensystems ist der Einsatz nickelfreier Anoden, die keine Methanreformierung an der Anode erlauben. Das Erreichen einer Redox-Reaktionsstabilität für die Hausenergieversorgung wird mit dem Hochtemperaturbrennstoffzellensystem erreicht.

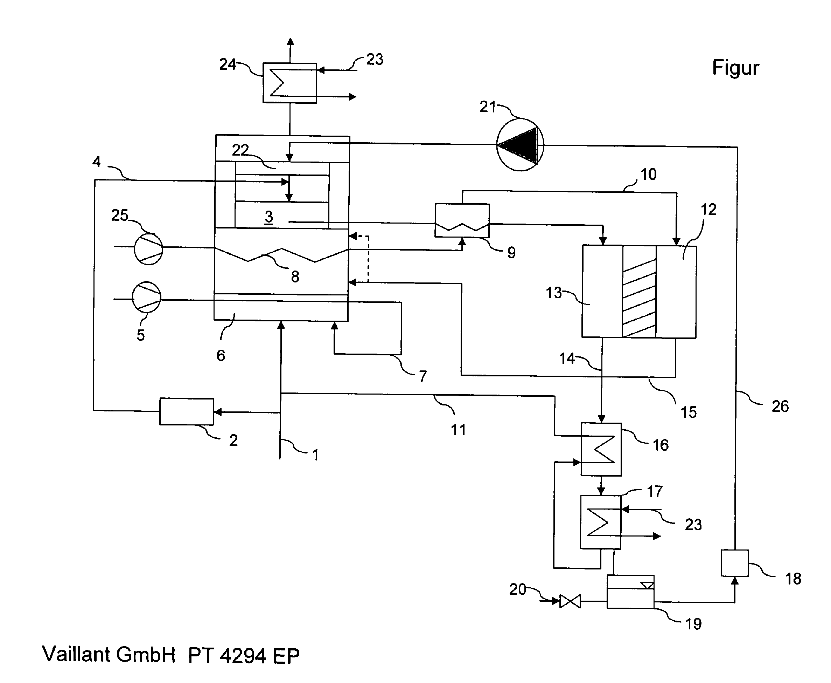

In der Figur ist die erfindungsgemäße Anordnung einer SOFC-Brennstoffzelle mit einem externen Dampfreformer dargestellt.

Zunächst soll der Brenngasweg erläutert werden. Die Figur zeigt ein Brennstoffzellensystem mit einer Anode 13 und einer Kathode 12. Das Leitungserdgas 1 wird zunächst in einer Entschwefelungsvorrichtung 2 entschwefelt, danach wird das entschwefelte Erdgas 4 einem Dampfreformer 3 zugeführt. Dort wird das Erdgas mit dem Prozessdampf des Dampferzeugers gemischt. Die Mischung kann z.B. durch die Anordnung eines statischen Mischers erfolgen. Das Gemisch wird dann einem Dampfreformierungskatalysator zugeführt, in dem das entschwefelte Erdgas in ein wasserstoffreiches Gas im wesentlichem nach den Reaktionsgleichungen (1) und (2) umgesetzt wird.

Der nickel- und/oder edelmetallhaltige Dampfreformierungskatalysator kann als Schüttung oder aber in monolithischer Form im Dampfreformer 3 vorliegen, wobei der Reformer 3 als Rohrreaktor ausgeführt ist. Denkbar ist auch, dass der Dampfreformer 3 ein Plattenreaktor ist, dessen Oberflächen des Reaktorinnenraums entsprechend katalytisch beschichtet sind. Beheizt wird der Dampfreformer 3 mit der Abwärme des Nachbrenners 6 und der warmen Kathodenabluft 15.

Ein Dampferzeuger (Verdampfer) 22 befindet sich stromaufwärts des Dampfreformers 3. Der Dampferzeuger 22 wird durch eine Speisewasserpumpe 21 mit Prozesswasser versorgt, welches in einer sich stromauf der Speisewasserpumpe 21 angeordneten Reinigungsstufe 18 von störenden Ionen befreit wird. Somit wird dem Dampferzeuger 22 deionisiertes Prozesswasser zugeführt, welches z.B. eine elektrische Leitfähigkeit von kleiner einem Mikro-Siemens hat. Durch die Anordnung eines Leitfähigkeitsmessgerätes stromab der Reinigungsstufe kann die Qualität des Prozesswassers überwacht werden. Der Reinigungsstufe 18 ist stromauf ein Wassertank 19 angeordnet, der durch Kondensat aus der Kondensator/Rekuperator-Einheit (17, 16) gespeist wird. Diese Einheit befindet sich stromabwärts der Anode des SOFC-Stacks. Der Tank 19 kann bei Bedarf zusätzlich mit Wasser aus dem öffentlichen Trinkwassernetz 20 oder einer anderen Wasserquelle, z.B. Regenwassernutzungsanlage gespeist werden. Eine Nachspeisung von Prozesswasser ist immer dann erforderlich, wenn die Kondensator/Rekuperator-Einheit über längere Zeit den Tank 19 nicht ausreichend mit Kondensat nachfüllt. Solche Situationen können immer dann entstehen, wenn das Heizungssystem mit hohen Rücklauftemperaturen z.B. 60°C längerfristig betrieben wird.

Dem Dampfreformer 3 stromabwärts ist ein Gas/Gas-Wärmeübertrager angeordnet. Das den Dampfreformer verlassende wasserstoffreiche Brenngas nimmt eine Temperatur an, die der Dampfreformierungstemperatur ähnlich ist.

Dampfreformer werden üblicherweise bei Temperaturen zwischen 550°C und 700°C betrieben. Damit liegt die Brenngastemperatur hinter dem Dampfreformer unter der erforderlichen Anodeneintrittstemperatur von z.B. 780°C bis 800°C. Aufgabe der Brenngas-Vorwärmung ist es nun zum einen die vorgewärmte Kathodenzuluft auf die geforderte Kathodeneintrittstemperatur abzukühlen und andererseits das Brenngas auf die geforderte Anodeneintrittstemperatur zu erwärmen. Ein Brenngaswärmetauscher 9 kann in die Nachbrenner/Kathodenluftvorwärmungs- und Dampfreformierungs- und erzeugungsbaugruppe integriert sein.

Die Kathodenzuluft wird aus der Umgebung angesaugt und mittels eines Gebläses 25 oder Verdichters auf ein entsprechendes Druckniveau komprimiert, damit die Druckverluste im Luftweg ausgeglichen werden können. Die so komprimierte Luft wird entweder nur mit den warmen Abgasen des Nachbrenners 6 erwärmt oder aber den Abgasen des Nachbrenners 6 und der Kathodenabluft 15 erwärmt, welche stromauf eines Kathodenluftwärmetauschers 8 miteinander vermischt werden. Um diese Vermischung zu verbessern, kann stromauf des Kathodenluftwärmetauschers 8 ein statischer Mischer angeordnet sein. Die Kathodenzuluft wird auf eine Temperatur erwärmt, die über der Kathodeneintrittstemperatur liegt, so dass mit der erwärmten Kathodenzuluft im Brenngaswärmetauscher 9 das Brenngas auf die erforderliche Anodeneintrittstemperatur erwärmt werden kann.

Das erwärmte Brenngas und die erwärmte Kathodenzuluft 10 werden dem SOFC-Brennstoffzellenstapel zugeleitet, wo ein Teil des Brenngases in der Anode elektrochemisch umgesetzt wird. Dazu werden Sauerstoffionen über einen keramischen Elektrolyten (z.B. Yttrium-stabilisiertes Zirkonoxid YSZ) zur Anode geleitet.

Mit der so sauerstoffangereichten Kathodenabluft wird ein Großteil der im Stack erzeugten Joul'schen Wärme abgeführt. Der andere Teil dieser Wärme wird mit dem Anodenabgas abgeführt.

Die Kondensator/Rekuperator/Einheit (17, 16) ist stromabwärts der Anode 13 angeordnet. Aufgabe dieser Einheit ist es, dem Anodenabgas Wasser zu entziehen, um einerseits die Nachverbrennung des Anodenabgases stabiler zu gestalten und um andererseits Wasser für die Prozesswasserversorgung zu gewinnen.

Das die Anode verlassende Anodenabgas 14 wird in dem Rekuperator 16 abgekühlt und dann in den Kondensator 17 geleitet, wo das Anodenabgas mit Heizungswasser 23 weiter abgekühlt wird. Bei dieser Abkühlung wird der Taupunkt des Anodenabgases in den meisten Betriebszuständen signifikant unterschritten, so dass größere Mengen Wasser aus dem Anodenabgas auskondensiert werden kann. Dieses Kondensat wird dem Tank 19 zugeführt und dort zwischengespeichert, um von dort über die Reinigungsstufe 18 von der Speisewasserpumpe 21 in den Dampferzeuger 22 gepumpt zu werden.

Das wasserabgereichte Anodenabgas wird dann dem Rekuperator 16 zugeführt und wird dort mit dem heißen, feuchten Anodenabgas 14 aus der Anode wieder erwärmt. Dieses wieder erwärmte wasserabgereichte Anodenabgas wird über eine Leitung 11 dem stromabwärts angeordneten Nachbrenner 6 zugeführt.

Das Anodenabgas aus der Kondensator/Rekuperator-Einheit wird in dem Nachbrenner 6 mit Luftsauerstoff vom Luftgebläse 5 nachverbrannt, da das Anodenabgas noch brennbare Bestandteile (CO, CH4, H2) enthält. Diese Komponenten dürfen dem Abgassystem der Hausanlage nicht unbehandelt übergeben werden.

Um die Nachverbrennung zu stabilisieren oder zusätzlich Wärme für die Kathodenluftvorwärmung oder die Dampfreformierung sowie Prozessdampferzeugung bereitzustellen, kann dem Anodenabgas Erdgas 1 beigemengt werden, welches dann gemeinsam im Nachbrenner 6 verbrannt wird. Um die Nachverbrennung weiter zu stabilisieren und ggf. auf die Beigabe von Erdgas verzichten zu können, wird die erforderliche Verbrennungsluft 7 mit den Abgasen des Nachbrenners vorgewärmt.

Stromabwärts der Verbrennungsluftvorwärmung 6 ist der Kathodenluftwärmetauscher 8 angeordnet, der als nächstes mit den heißen Abgasen des Nachbrenners erwärmt wird.

Stromabwärts der Kathodenluftvorwärmung 8 ist der Dampfreformer 3 angeordnet, der durch die Abgase des Nachbrenners 6 beheizt wird. Dem Dampfreformer 3 nachgeschaltet sind noch ein Dampfüberhitzer, der Dampferzeuger 22 und ein Prozesswasservorwärmer (in der Figur schematisch dargestellt).

Stromabwärts der oben beschriebenen Einheit ist ein weiterer Wärmeübertrager 24 angeordnet, der die Abgase des Nachbrenners mit Heizungswassser 23 weiter abkühlt und Heizwärme für das Haus bereitstellt.

Die oben dargestellte Hintereinanderschaltung der verschiedenen Wärmeverbraucher stromabwärts des Nachbrenners ist den unterschiedlichen erforderlichen Temperaturniveaus geschuldet.

Der Nachbrenner 6 kann als Porenbrenner, katalytischer oder aber auch als Flox-Brenner ausgebildet sein. Der Nachbrenner 6 kann auch als Startbrenner eingesetzt werden, um dass System auf Betriebstemperatur zu bringen.

Die vorgeschlagene Anordnung erlaubt den Einsatz von nickelfreien Anodenelektrodenkatalysatoren, die keine interne Methanreformierung erlauben. Dennoch braucht nicht auf die Vorzüge, wie z.B. hoher elektrischer Wirkungsgrad verzichtet werden, da der Anode ein externer Dampfreformer vorgeschaltet ist. Dieser vereint in sich die Aufgaben des sonst üblichen Vorreformers und der internen Methanreformierung in nickelhaltigen Anoden.

Weiterer Vorteil der erfindungsgemäßen Anordnung ist, dass eine Modulation leichter möglich ist, weil die Methanreformierung und die elektrochemische Oxidation von Wasserstoff nicht mehr direkt mit einander gekoppelt sind. Somit wird auch die Regelung solcher Systeme im häuslichen Umfeld verbessert.

Die erfindungsgemäße Anordnung ermöglicht auch einen von einer externen Wasserversorgung unabhängigen Betrieb, sofern Rücklauftemperaturen > 60°C des Heizungswassers nur kurzzeitig anstehen. In diesen Phasen wird der Prozesswasserbedarf durch zwischengespeichertes Wasser gedeckt. Der interne Prozesswasserspeicher kann in Betriebsphasen mit Rücklauftemperaturen < 60°C schnell wieder ergänzt werden.

## Patentansprüche

1. Hochtemperaturbrennstoffzellensystem, welches eine brenngasführende Anode (13) und eine luftführende Kathode (12), ein Dampfreformer (3) zur Brenngasbereitung, ein dem Dampfreformer (3) nachgeschalteter Wärmetauscher (9) zur Nachbehandlung von Brenngas und mindestens ein Wärmetauscher (16, 17) zur Nachbehandlung von Anodenabgas aufweist **dadurch gekennzeichnet, dass**
• der Dampfreformer (3) stromauf der Anode (13) angeordnet ist, wobei diesem über eine Leitung (26), eine Pumpe (21) und einen vorgeschalteten Dampferzeuger (22) deionisiertes Wasser zur Erzeugung vom wasserstoffangereicherten Brenngas zugeführt wird und
• der dem Dampfreformer (3) nachgeschalteten Wärmetauscher (9) zwischen dem Dampfreformer (3) und der Anode (13) vorgesehen ist.

2. Hochtemperaturbrennstoffzellensystem nach Anspruch 1, **dadurch gekennzeichnet, dass** ein erster Wärmetauscher (16) und ein zweiter Wärmetauscher (17) angeordnet in Reihe stromab der Anode (13) für die Nachbehandlung von Anodenabgas vorgesehen sind, wobei ein Teil des kondensierten Anodenabgases aus dem zweiten Wärmetauscher (17) über einen Tank (19) und die Leitung (26) führend zum Dampferzeuger (22) dem Dampfreformer (3) zugeführt wird.

3. Hochtemperaturbrennstoffzellensystem nach Anspruch 2, **dadurch gekennzeichnet, dass** ein Teil des kondensierten Anodenabgases aus dem zweiten Wärmetauscher (17) dem ersten Wärmetauscher (16) zurückgeführt wird und über eine Leitung (11) am ersten Wärmetauscher (16) einem Nachbrenner (6) zugeführt wird.

4. Hochtemperaturbrennstoffzellensystem nach Anspruch 1, **dadurch gekennzeichnet, dass** ein Teil des Brenngases aus dem Wärmetauscher (9), angeordnet zwischen der Anode (13) und dem Dampfreformer (3), über eine Leitung (10) in die Kathode (12) zugeführt wird.

5. Hochtemperaturbrennstoffzellensystem nach Anspruch 1, **dadurch gekennzeichnet, dass** eine Leitung (15) vom Ausgang der Kathode (12) zu einem Wärmetauscher (8) für die Zuführung von Kathodenabluft vorgesehen ist.

6. Hochtemperaturbrennstoffzellensystem nach Anspruch 5, **dadurch gekennzeichnet, dass** der Wärmetauscher (8) dem Dampfreformer (3) vorgeschaltet und zwischen dem Dampfreformer (3) und einem Nachbrenner (6) angeordnet ist und von Umgebungsluft und/oder Brennstoff versorgt wird.
